# EUROPÄISCHE PATENTSCHRIFT

(11) **EP 2 194 833 B1**
(45) Veröffentlichungstag und Bekanntmachung des Hinweises auf die Patenterteilung: **14.01.2015**
(21) Anmeldenummer: 08803201.6
(22) Anmeldetag: 25.08.2008
(51) Int. Cl.: A47L 15/00, A47L 15/42

(54) **Verfahren zum Betreiben eines wasserführenden Haushaltsgeräts, sowie wasserführendes Haushaltsgerät**
Method for the operation of a water-conducting household appliance, and water-conducting household appliance
Procédé de fonctionnement d'un appareil ménager à circulation d'eau, et appareil ménager à circulation d'eau

(30) Priorität: 31.08.2007 DE 102007041311
(43) Veröffentlichungstag der Anmeldung: 16.06.2010
(73) Patentinhaber: BSH Bosch und Siemens Hausgeräte GmbH, 81739 München (DE)
(72) Erfinder: HESTERBERG, Bernd, 89520 Heidenheim (DE); REHM, Karlheinz, 89561 Dischingen Ortst. Trugenhofen (DE); WAGNER, Franz-Josef, 86720 Nördlingen (DE)
(86) Internationale Anmeldenummer: PCT/EP2008/061085
(87) Internationale Veröffentlichungsnummer: WO 2009/027371

(56) Entgegenhaltungen:
- EP-A- 0 326 893
- EP-A- 0 461 722
- DE-A1- 19 945 925
- GB-A- 2 271 417
- US-A- 4 097 307

## Beschreibung

Die Erfindung betrifft ein Verfahren zum Betreiben eines wasserführenden Haushaltsgeräts, insbesondere einer Geschirrspül- oder Waschmaschine, sowie ein wasserführendes Haushaltsgerät.

Die DE 38 03 006 A1 offenbart eine Geschirrspülmaschine mit einem Spülbehälter, einem Wasserzulaufventil zum Befüllen des Spülbehälters mit Flüssigkeit, einer im Spülbehälter angeordneten Sprühvorrichtung, einer Umwälzpumpe zum Fördern der Flüssigkeit zur Sprühvorrichtung und einem Elektromotor zum Antreiben der Umwälzpumpe. Damit sich im Spülbehälter gerade so viel Flüssigkeit befindet, dass die Umlaufpumpe ohne Lufteinschlüsse die Flüssigkeit zur Sprühvorrichtung fördern kann, offenbart die DE 38 03 006 A1 nach einer abgeschlossenen Mindestfüllung des Spülbehälters mit der Flüssigkeit das Wasserzulaufventil zum Befüllen des Spülbehälters beim Erreichen eines gleichbleibenden Messwertes der Stromaufnahme des Elektromotors für die Umwälzpumpe zu schließen.

Die DE 42 33 643 C2 offenbart eine Geschirrspülmaschine mit einem Spülbehälter und einem mit dem Spülbehälter wärmeleitend verbundenen Vorratsbehälter zur Bevorratung von Flüssigkeit, die in einem nachfolgenden Teilprogramm eines Gesamtprogramms der Geschirrspülmaschine eingesetzt werden soll. Aufgrund der wärmeleitenden Verbindung zwischen dem Behälter und dem Vorratsbehälter wird die im Vorratsbehälter befindliche Flüssigkeit für das Teilprogramm vorgewärmt.

Aus der EP 0 461 722 A1 ist ein Verfahren zum Betreiben einer Geschirrspülmaschine bekannt, die einen Vorratsbehälter aufweist, der flüssigkeitsleitend mit einem Spülbehälter in Verbindung ist. Hierfür weist der Vorratsbehälter bodenseitig eine Abflussleitung mit einem Dosierventil auf. Die Abflussleitung führt zu einer Wasserenthärtungsanlage, über die die Flüssigkeit in den Spülraum geleitet werden kann Über eine Niveauregenerierung mittels eines Schwimmers und zweier Reedschalter wird das Füllvolumen des Vorratsbehälters bestimmt und geregelt.

Die Aufgabe der vorliegenden Erfindung ist es daher, ein vereinfachtes Verfahren zum Erkennen eines vollen Vorratsbehälters eines wasserführenden Haushaltsgeräts anzugeben.

Die Aufgabe der Erfindung wird gelöst durch ein Verfahren zum Betreiben eines wasserführenden Haushaltsgeräts, aufweisend folgende Verfahrensschritte:
- Füllen des Vorratsbehälters mit Flüssigkeit,
- Starten der Umwälzpumpe,
- Überwachen wenigstens eines der Umwälzpumpe zugeordneten Betriebsparameters, und
- Beenden des Füllens des Vorratsbehälters mit Flüssigkeit, wenn der Betriebsparameter einen vorgegebenen Schwellenwert erreicht und/oder wenn der Betriebsparameter eine vorgegebene Schwankungsbreite überschreitet.

Ferner wird die Aufgabe der Erfindung wird gelöst durch ein wasserführendes Haushaltsgerät mit den Merkmalen des Anspruchs 10.

Das erfindungsgemäße wasserführende Haushaltsgerät weist einen Vorratsbehälter auf, der insbesondere wärmeleitend mit dem Spülbehälter verbunden ist, indem er z.B. an einer Wand des Spülbehälters befestigt ist. Im Betrieb der Geschirrspülmaschine wird der Vorratsbehälter mit Flüssigkeit, z.B. mit Wasser aus einem Wasseranschluss gefüllt, bis er voll ist. Dazu öffnet die Steuervorrichtung, die beispielsweise einen geeignet programmierten Mikroprozessor aufweist, das Ventil. Ist der Vorratsbehälter völlig mit Flüssigkeit gefüllt, dann fließt die überschüssige Flüssigkeit z.B. über einen Überlaufauslauf vom Vorratsbehälter in den Spülbehälter. Ferner kann der Vorratsbehälter wärmeleitend mit einer Außenwand des wasserführenden Haushaltsgeräts verbunden sein.

Im Spülbehälter kann eine Sprühvorrichtung, z.B. in Form von Sprüharmen, angeordnet sein, zu der im Fall einer Geschirrspülmaschine im Betrieb eine als Umwälzpumpe dienende Pumpe im Spülbehälter befindliche Flüssigkeit fördert. Die Umwälzpumpe wird z.B. mit einem Antrieb angetrieben. Dieser weist z.B. einen elektrischen Motor auf, der beispielsweise von einer geeigneten Elektronik oder Leistungselektronik angesteuert wird. Der elektrische Motor kann beispielsweise ein Drehstrommotor, insbesondere eine bürstenloser Synchronmotor sein.

Gemäß dem erfindungsgemäßen Verfahren wird die Pumpe gestartet, indem insbesondere die Steuervorrichtung den Antrieb startet. Während des Befüllens des Vorratsbehälters befindet sich wenn, dann nur relativ wenig Flüssigkeit im Spülbehälter. Dies wird nach einer Variante des erfindungsgemäßen Verfahrens sicher gestellt, indem vor dem Beginn des Füllens des Vorratsbehälters mit Flüssigkeit und/oder vor dem Starten der Umlaufpumpe bzw. des elektrischen Antriebs im Spülbehälter befindliche Flüssigkeit abgepumpt wird. Dies kann z.B. durch Starten einer zum Abpumpen der im Spülbehälter befindlichen Flüssigkeit realisiert werden, die insbesondere von der Steuervorrichtung eingeschaltet wird.

Wie gerade erwähnt, befindet sich vor dem Befüllen des Vorratsbehälters wenn, dann nur relativ wenig Flüssigkeit im Spülbehälter. Daher läuft die Umwälzpumpe zunächst in Luft und hat eine relativ geringe und eine relativ konstante Leistungsaufnahme bzw. erzeugt ein relativ geringes und relativ konstantes Drehmoment. Ist der Vorratsbehälter voll und wird diesem trotzdem noch Flüssigkeit zugeführt, dann fließt die überschüssige Flüssigkeit beispielsweise über einen Überlaufauslauf in den Spülbehälter. Diese Flüssigkeit gelangt bestimmungsgemäß in die Pumpe, wodurch sich das Betriebsverhalten der Pumpe bzw. des die Pumpe antreibenden elektrischen Antriebs ändert. Wird der Vorratsbehälter weiter mit Flüssigkeit befüllt, so gelangt immer mehr Flüssigkeit in den Spülbehälter, bis die Pumpe im Wesentlichen kontinuierlich Flüssigkeit fördert, wodurch die Pumpe eine höhere, jedoch ebenfalls relativ konstante Leistungsaufnahme hat bzw. ein höheres, jedoch relativ konstantes Drehmoment erzeugt. In dem Zeitraum, in dem zwar Flüssigkeit in den Spülbehälter gelangt, diese jedoch noch nicht ausreicht, sodass die Pumpe im Wesentlichen kontinuierlich Flüssigkeit fördert, erhöht sich ist die Leistungsaufnahme bzw. das Drehmoment einerseits. Diese Betriebsparameter schwanken jedoch auch relativ stark, da die Pumpe Flüssigkeit und Luft fördert.

Erfindungsgemäß ist demnach vorgesehen, den wenigstens einen und der Pumpe zugeordneten Betriebsparameter zu überwachen und das Füllen des Vorratsbehälters dann zu beenden, wenn der Betriebsparameter den vorgegebenen Schwellenwert erreicht und/oder wenn der Betriebsparameter die vorgegebene Schwankungsbreite überschreitet. Ist dies der Fall, dann kann davon ausgegangen werden, dass der Vorratsbehälter vollständig mit Flüssigkeit gefüllt ist, sodass die Steuervorrichtung des erfindungsgemäßen wasserführenden Haushaltsgeräts den Füllvorgang beendet.

Die Pumpe, insbesondere die Umwälzpumpe wird beispielsweise von dem elektrischen Antrieb angetrieben. Nach einer Ausführungsform des erfindungsgemäßen Verfahrens bzw. des erfindungsgemäßen wasserführenden Haushaltsgerät, wie bspw. einer Geschirrspülmaschine, handelt es sich bei dem der Umwälzpumpe zugeordneten Betriebsparameter um einen Betriebsparameter des die Umwälzpumpe antreibenden elektrischen Antriebs. Der Betriebsparameter des elektrischen Antriebs ist z.B. dessen elektrische Leistung, ein elektrischer Strom des elektrischen Antriebs, eine elektrische Spannung des elektrischen Antriebs, ein vom elektrischen Antrieb aufzubringendes Drehmoment und/oder eine Drehzahl des elektrischen Antriebs. Diese Betriebsparameter können, wenn es sich insbesondere um eine elektronisch geregelten Antrieb handelt, relativ einfach im Betrieb der Geschirrspülmaschine ermittelt werden, wodurch sich das erfindungsgemäße Verfahren relativ einfach ausführen lässt. Auch kann es vorgesehen sein, den elektrischen Antrieb zu regeln oder zu steuern. In einem solchen Fall wird ein Betriebsparameter des elektrischen Antriebs oder der Umwälzpumpe für diese Steuerung oder Regelung benötigt, der dann auch dafür verwendet werden kann, um zu erkennen, wenn der Vorratsbehälter vollständig mit Flüssigkeit gefüllt ist. In einem solchen Fall bietet sich insbesondere die Verwendung des elektrischen Stroms oder der elektrischen Leistung des elektrischen Antriebs oder des Motors des elektrischen Antriebs als zu überwachenden Betriebsparameter an.

Bei einer Variante des erfindungsgemäßen Verfahrens bzw. des wasserführenden Haushaltsgeräts, bspw. einer erfindungsgemäßen Geschirrspülmaschine, bei dem bzw. der der Betriebsparameter der elektrischer Strom des elektrischen Antriebs ist, kann der Schwellenwert insbesondere einer elektrischen Stromstärke zugeordnet sein, die größer als die Stärke des elektrischen Stroms des elektrischen Antriebs ist, wenn die Umwälzpumpe im Wesentlichen nur in Luft läuft, und kleiner als die Stärke des elektrischen Stroms des elektrischen Antriebs ist, wenn die Umwälzpumpe im Wesentlichen kontinuierlich Flüssigkeit fördert. Bei der Variante des erfindungsgemäßen Verfahrens bzw. der erfindungsgemäßen Geschirrspülmaschine, bei dem bzw. der der Betriebsparameter die elektrische Leistung des elektrischen Antriebs ist, kann der Schwellenwert einer elektrischen Leistung zugeordnet sein, die größer als die elektrische Leistung des elektrischen Antriebs ist, wenn die Umwälzpumpe im Wesentlichen nur in Luft läuft, und kleiner als die elektrische Leistung des elektrischen Antriebs ist, wenn die Umwälzpumpe im Wesentlichen kontinuierlich Flüssigkeit fördert. Gemäß dieser Ausführungsformen kann somit sicher gestellt werden, dass der Vorratsbehälter einerseits vollständig gefüllt ist, bevor das Ventil geschlossen wird. Andererseits kann gemäß dieser Ausführungsformen ein relativ starkes Überlaufen des Vorratsbehälters verhindert werden.

Mittels des erfindungsgemäßen Verfahrens bzw. der erfindungsgemäßen Geschirrspülmaschine ist es demnach möglich, einen vollen Vorratsbehälter insbesondere ohne einen speziellen Schalter, der erkennt, wenn der Vorratsbehälter vollständig mit Flüssigkeit gefüllt ist, zu erkennen.

Ein Ausführungsbeispiel der Erfindung ist exemplarisch in den beigefügten schematischen Zeichnungen dargestellt. Es zeigen:
- Fig. 1: eine Geschirrspülmaschine,
- Fig. 2: ein Prinzipschaubild der Geschirrspülmaschine mit einer Umwälzpumpe und einem Vorratsbehälter,
- Fig. 3: ein der Umwälzpumpe zugeordneter Signalverlauf und
- Fig. 4: ein Flussdiagramm zum Veranschaulichen eines Verfahrens zum Befüllen des Vorratsbehälters.

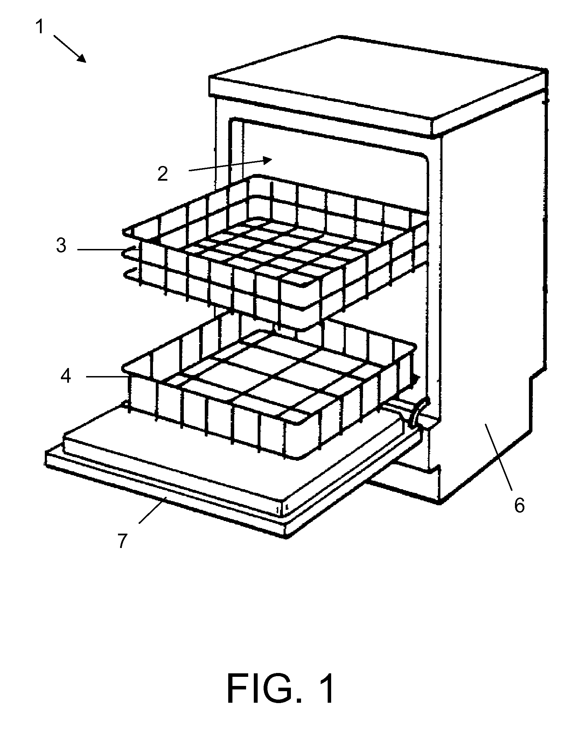

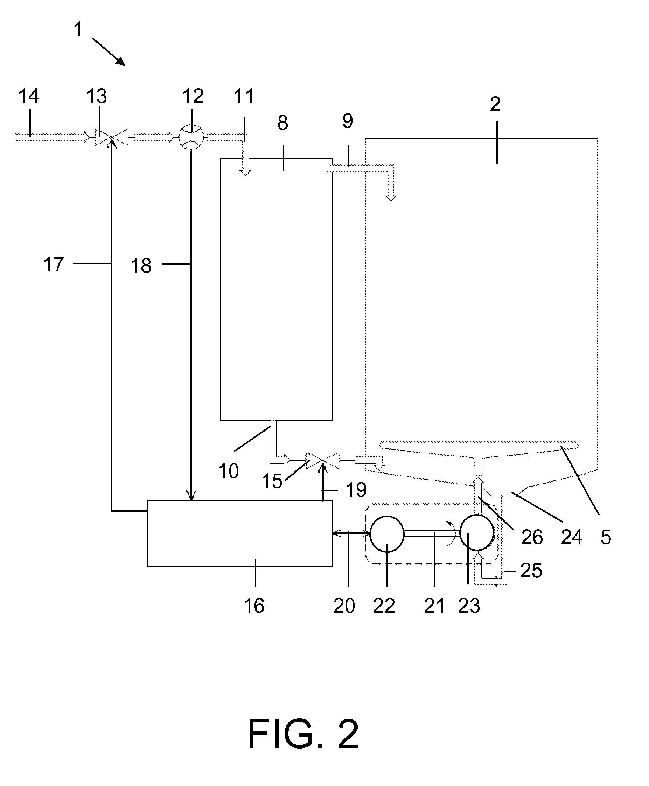

Die Fig. 1 zeigt eine Geschirrspülmaschine 1 und die Fig. 2 zeigt ein Prinzipschaubild der Geschirrspülmaschine 1. Die Geschirrspülmaschine 1 weist einen Spülbehälter 2 zur Aufnahme von Spülgut, z.B. verschmutztem Geschirr und Besteck auf, das beispielsweise in einem Geschirroberkorb 3 und einem Geschirrunterkorb 4 eingeordnet ist. In dem Spülbehälter 2, der beispielsweise aus Metall, z.B. aus Chrom, Stahl oder Chrom-Nickel gefertigt ist, sind Sprühvorrichtungen, z.B. allgemein bekannte Sprüharme 5 zum Beaufschlagen des Spülguts mit einer Flüssigkeit, die üblicherweise als Spülflotte bezeichnet wird, angeordnet. Im Boden des Spülbehälters 2 befindet sich ein Pumpentopf 24, in dem eine Umwälzpumpe 23 angeordnet ist. Flüssigkeit des Spülbehälters 2 gelangt über den Pumpentopf 24 in die Umwälzpumpe 23, was mit einem Pfeil 25 in der Fig. 2 veranschaulicht ist. Die Umwälzpumpe 23 fördert wiederum die Flüssigkeit zu den Sprüharmen 5, was in der Fig. 2 mit einem Pfeil 26 veranschaulicht ist.

Der Spülbehälter 2 ist in einem Gehäuse 6 der Geschirrspülmaschine 1 angeordnet und umfasst zwei Seitenwände. Die ins Innere des Spülbehälters 2 zeigenden Seiten der Seitenwände des Spülbehälters 2 sind bei geöffneter Tür 7 der Geschirrspülmaschine 1 sichtbar. Bei geöffneter Tür 7 können der Geschirroberkorb 3 und der Geschirrunterkorb 4 aus dem Spülbehälter 2 herausgezogen werden.

Im Falle des vorliegenden Ausführungsbeispiels ist zwischen einer der Seitenwände des Spülbehälters 2 und der entsprechenden Seitenwand des Gehäuses 6 ein als Wärmetauscher wirkender Vorratsbehälter 8 für Flüssigkeit, insbesondere für Frischwasser angeordnet. Der Vorratsbehälter 8 ist wärmeleitend mit der relevanten Seitenwand des Spülbehälters 2 verbunden, sodass die im Vorratsbehälter 8 befindliche Flüssigkeit von der erwärmten Flüssigkeit im Spülbehälter 2 erwärmt wird. Der Vorratsbehälter 8 liegt beispielsweise direkt mit einer seiner Seitenwände an der relevanten Seitenwand des Spülbehälters 2 an und ist mit dieser z.B. verschraubt oder verklipst.

Der Vorratsbehälter 8 weist einen Flüssigkeitszulauf 11 und einen Auslass 10 zum Abführen der Flüssigkeit des Vorratsbehälters 8 in den Spülbehälter 2 auf. Dem Flüssigkeitszulauf 11 ist ein Flügelradzähler 12 und dem Flügelradzähler 12 ist wiederum ein Füllventil 13 vorgeschaltet, mittels dem im Falle des vorliegenden Ausführungsbeispiels der Vorratsbehälter 8 mit Frischwasser aus einem Wasseranschluss 14 befüllt werden kann. Dem Auslass 10 ist ein Auslassventil 15 nachgeschaltet, mittels dem die Flüssigkeit des Vorratsbehälters 8 kontrolliert in den Spülbehälter 2 abgelassen werden kann. Des Weiteren weist der Vorratsbehälter 8 einen Überlaufauslauf 9 auf, über den überschüssige Flüssigkeit des Vorratsbehälters 8 in den Spülbehälter 2 fließen kann.

Die Geschirrspülmaschine 1 weist ferner eine Steuervorrichtung 16 auf, die z.B. einen geeignet programmierten Mikroprozessor aufweist. Die Steuervorrichtung 16 wird in nicht dargestellter Weise mit elektrischer Energie versorgt und ist mittels einer elektrischen Leitung 17 mit dem Füllventil 13 und mittels einer elektrischen Leitung 19 mit dem Auslassventil 15 verbunden, sodass die Steuervorrichtung 16 mittels eines auf dieser laufendem Rechenprogramms das Füllventil 13 und das Auslassventil 15 öffnen und schließen kann, um die Befüllung des Vorratsbehälters 8 mit Flüssigkeit aus dem Wasseranschluss 14 und ein Abfließen der Flüssigkeit aus dem Vorratsbehälter 8 in den Spülbehälter 2 zu steuern.

Mittels des Flügelradzählers 12, der über eine elektrische Leitung 18 mit der Steuervorrichtung 16 verbunden ist, kann die in den Vorratsbehälter 8 fließende Menge Flüssigkeit gemessen werden.

Die Geschirrspülmaschine 1 weist ferner einen elektrischen Antrieb 22 auf, dessen elektrischer Motor über eine Welle 21 die Umwälzpumpe 23 antreibt. Im Falle des vorliegenden Ausführungsbeispiels handelt es sich bei dem Motor des elektrischen Antriebs 22 über einen sogenannten BLDC Motor, also um einen bürstenlosen Drehstrom-Synchronmotor. Der elektrische Antrieb 22 weist ferner einen Wechselrichter auf, der den elektrischen Motor des elektrischen Antriebs 22 mit elektrischer Energie versorgt. Der Wechselrichter erzeugt die erforderliche elektrische Dreiphasen-Spannung für den Motor, also die erforderliche Frequenz und den erforderlichen Effektivwert der elektrischen Spannung. Geeignete Wechselrichter weisen z.B. Leistungshalbleiter auf und sind dem Fachmann im Allgemeinen bekannt, weshalb der Wechselrichter nicht explizit dargestellt ist und auch nicht weiter erläutert wird.

Der elektrische Antrieb 22 ist mittels einer elektrischen Leitung 20 mit der Steuervorrichtung 16 verbunden, sodass die Steuervorrichtung 16 den Wechselrichter bzw. den elektrischen Antrieb 22 in Allgemein bekannter Weise steuern und gegebenenfalls auch regeln kann.

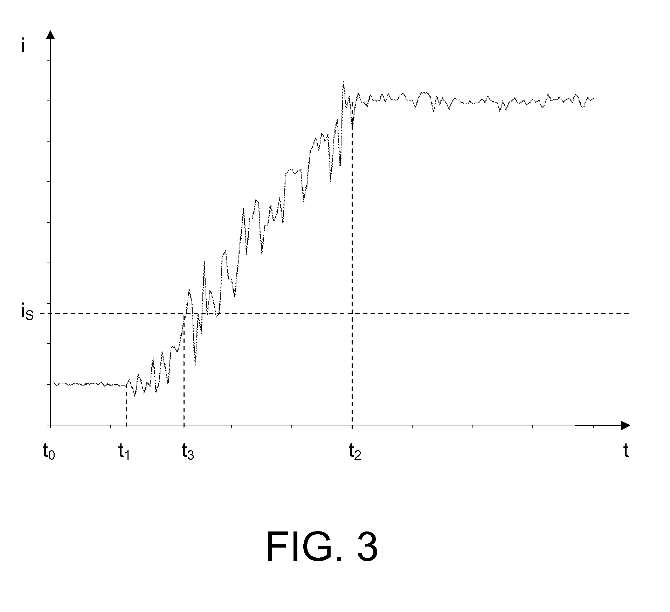

Über die elektrische Leitung 20 erhält die Steuervorrichtung 16 auch eine Information über wenigstens einen Betriebsparameter des elektrischen Antriebs 22. Der Betriebsparameter des elektrischen Antriebs 22 kann z.B. zum Steuern bzw. Regeln des elektrischen Antriebs 22 verwendet werden. Im Falle des vorliegenden Ausführungsbeispiels handelt es sich bei dem Betriebsparameter um die elektrische Leistung des elektrischen Antriebs 22 oder um den elektrischen Strom i des Motors des elektrischen Antriebs 22. Die Fig. 3 zeigt beispielhaft einen Verlauf des elektrischen Stroms i.

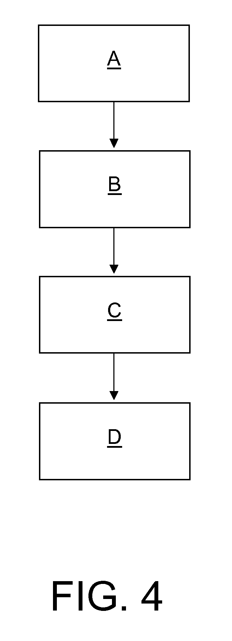

Im Falle des vorliegenden Ausführungsbeispiels wird der elektrische Strom i des elektrischen Motors verwendet, um eine vollen Vorratsbehälter 8 zu erkennen. Ein in der Fig. 4 dargestelltes Flussdiagramm fasst das im Falle des vorliegenden Ausführungsbeispiels verwendete Verfahren zum Befüllen des Vorratsbehälters 8 mit Flüssigkeit zusammen. Kurz vor dem Befüllen des Vorratsbehälters 8 mit Flüssigkeit aus dem Wasserzufluss 14 befindet sich keine Flüssigkeit im Spülbehälter 2 und die Umwälzpumpe 23 wird gestartet, indem der elektrische Antrieb 22 der Umwälzpumpe 23 zum Zeitpunkt t₀ (Fig. 3) gestartet wird, Schritt A des Flussdiagramms. Die Flüssigkeit wurde z.B. aus dem Spülbehälter 2 mittels einer nicht dargestellten, jedoch allgemein bekannten Pumpe abgepumpt. Da sich im Spülbehälter 2 keine bzw. wenn, dann nur relativ wenig Flüssigkeit befindet, also auch der Pumpentopf 24 leer ist, läuft die Umwälzpumpe 23 in Luft. Die Leistungsaufnahme des elektrischen Antriebs 22 und somit auch der elektrische Strom i des elektrischen Motors ist demnach relativ gering und auch relativ konstant.

Beispielsweise gleichzeitig mit dem Starten der Umwälzpumpe 23 öffnet die Steuervorrichtung 16 bzw. ein auf der Steuervorrichtung 16 laufendes Rechenprogramm das Füllventil 13, wodurch Flüssigkeit vom Wasseranschluss 14 über den Flüssigkeitszulauf 11 in den Vorratsbehälter 8 fließt, Schritt B des Flussdiagramms. Das Auslassventil 15 ist geschlossen. Solange der Vorratsbehälter 8 noch nicht vollständig mit Flüssigkeit aus dem Wasseranschluss 14 gefüllt ist, befindet sich immer noch keine Flüssigkeit im Spülbehälter 2. Die Umwälzpumpe 23 läuft demnach noch in Luft und hat die relativ geringe und relativ konstante Leistungsaufnahme (Leerlaufleistung).

Zum Zeitpunkt t₁ ist der Vorratsbehälter 8 vollständig gefüllt und überschüssige Flüssigkeit des Vorratsbehälters 8 beginnt über den Überlaufauslauf 9 des Vorratsbehälters 8 in den Spülbehälter 2 zu laufen. Diese Flüssigkeit gelangt in den Pumpentopf 24 und von dort in die Umwälzpumpe 23. Die Umwälzpumpe 23 beginnt die Flüssigkeit zu fördern, wodurch die Leistungsaufnahme des elektrischen Antriebs 22 und somit der elektrische Strom i des elektrischen Motors zu steigen beginnt.

Wird das Füllventil 13 nicht geschlossen, so gelangt immer mehr Flüssigkeit in den Vorratsbehälter 8 und somit über den Überlaufauslauf 9 in den Spülbehälter 2. Dadurch fördert die Umwälzpumpe 23 immer mehr Flüssigkeit und die Leistung des elektrischen Antriebs 22 bzw. der elektrische Strom i des Motors steigt solange, bis sich im Spülbehälter 2 zum Zeitpunkt t₂ so viel Flüssigkeit befindet, sodass die Umwälzpumpe 23 im Wesentlichen kontinuierlich Flüssigkeit fördern kann. Ab dem Zeitpunkt t₂ stellt sich somit wieder eine relativ konstante Leistungsaufnahme ein, die Wesentlich größer als die Leerlaufleistung des elektrischen Antriebs 22 ist. Der elektrische Strom i des elektrischen Motors ist demnach ab dem Zeitpunkt t₂ relativ konstant und größer als der elektrische Strom i vor dem Zeitpunkt t₁.

Im Zeitraum zwischen t₁ und t₂ befindet sich zwar Flüssigkeit im Spülbehälter 2. Die Menge dieser Flüssigkeit reicht jedoch nicht aus, dass die Umwälzpumpe 23 im Wesentlichen kontinuierlich Flüssigkeit fördert. Im Zeitraum zwischen t₁ und t₂ fördert die Umwälzpumpe 23 vielmehr ein Gemisch aus Luft und Flüssigkeit, wodurch die Leistungsaufnahme des elektrischen Antriebs 22 zwar mit zunehmender Menge von Flüssigkeit im Spülbehälter 2 steigt, jedoch auch relativ stark schwankt. Dies bewirkt wiederum einen relativ stark schwankenden elektrischen Strom i des elektrischen Motors.

Im Falle des vorliegenden Ausführungsbeispiels überwacht die Steuervorrichtung 16 bzw. das auf der Steuervorrichtung 16 laufende Rechenprogramm den elektrischen Strom i des elektrischen Motors und vergleicht diesen mit einem vorab gespeicherten Schwellenwert i_{S}, Schritt C des Flussdiagramms. Dieser Schwellenwert i_{S} liegt zwischen dem elektrischen Strom i bei Leerlauf und dem elektrischen Strom i ab dem Zeitpunkt t₂ und wird im Falle des vorliegenden Ausführungsbeispiels zum Zeitpunkt t₃ erreicht.

Erkennt die Steuervorrichtung 16, dass der elektrische Strom i des elektrischen Motors den Schwellenwert i_{S} erreicht hat, dann schließt sie automatisch das Füllventil 13, wodurch die Zufuhr von Flüssigkeit aus dem Wasseranschluss 14 in den Vorratsbehälter 8 gestoppt wird, Schritt D des Flussdiagramms. Somit kann ein voller Vorratsbehälter 8 in relativ einfacher Weise erkannt werden.

Im Falle des beschriebenen Ausführungsbeispiels wird der elektrische Strom i des elektrischen Motors des elektrischen Antriebs 22 für die Umwälzpumpe 23 für das Erkennen eines vollen Vorratsbehälters 8 überwacht. Andere Betriebsparameter des elektrischen Antriebs 22 oder der Umwälzpumpe 23 sind auch geeignet. Weitere geeignete Betriebsparameter sind z.B. das Drehmoment des elektrischen Motors oder der Umwälzpumpe 23, eine elektrische Spannung des elektrischen Antriebs 22, beispielsweise der Effektivwert der vom Wechselrichter erzeugten elektrischen Spannung, oder eine Drehzahl des elektrischen Motors.

Der volle Vorratsbehälter 8 kann auch dadurch erkannt werden, indem eine relativ große Schwankung des Betriebsparameters erkannt wird. Wie obenstehend ausgeführt, schwankt der elektrische Strom i im Zeitraum zwischen t₁ und t₂ relativ stark. Eine relativ große Schwankung des Betriebsparameters kann somit auch zum Erkennen eine vollen bzw. überlaufenden Vorratsbehälters 8 verwendet werden.

Im Falle des beschriebenen Ausführungsbeispiels wird die Umwälzpumpe 23 vom elektrischen Antrieb 22 angetrieben, dessen Motor ein bürstenloser Drehstrom-Synchronmotor ist. Andere elektrische Antriebe für die Umwälzpumpe 23 sind auch möglich. Insbesonde-re ist es nicht nötig, dass es sich bei dem elektrischen Antrieb 22 um einen Drehstrom-Antrieb handelt. Beispielsweise Gleichspannungs- oder Wechselspannungs-Antriebe sind auch verwendbar.

## Patentansprüche

1. Verfahren zum Betreiben eines wasserführenden Haushaltsgeräts, insbesondere einer Geschirrspül- oder Waschmaschine, wenigstens aufweisend einen Vorratsbehälter (8), der mittels eines Überlaufauslaufs (9) flüssigkeitsleitend mit einem Spülbehälter (2) verbunden ist und mit einer Pumpe (23), die mit dem Spülbehälter (2) flüssigkeitsleitend in Verbindung steht,
aufweisend die beiden Verfahrensschritte
- Starten der Pumpe (23), und
- Füllen des Vorratsbehälters (8) mit Flüssigkeit,
in beliebiger Reihenfolge oder zeitgleich,
ferner aufweisend die weiteren Verfahrenschritte
- Überwachen wenigstens eines der Pumpe (23) zugeordneten Betriebsparameters (i) nach dem Starten der Pumpe (23), und
- Beenden des Füllens des Vorratsbehälters (8) mit Flüssigkeit, wenn der Betriebsparameter (i) einen vorgegebenen Schwellenwert (iS) erreicht und/oder wenn der Betriebsparameter (i) eine vorgegebene Schwankungsbreite überschreitet.

2. Verfahren nach Anspruch 1, **dadurch gekennzeichnet, dass** der Vorratsbehälter (8) wärmeleitend mit dem Spülbehälter (2) verbunden ist.

3. Verfahren nach Anspruch 1 oder 2, **dadurch gekennzeichnet, dass** der Vorratsbehälter (8) wärmeleitend mit einer Außenwand des wasserführenden Haushaltsgeräts verbunden ist.

4. Verfahren nach einem der vorhergehenden Ansprüche, **dadurch gekennzeichnet, dass** durch die Pumpe (23) Flüssigkeit zu innerhalb des Spülbehälters (2) angeordnete Sprühvorrichtungen (5) gefördert wird.

5. Verfahren nach einem der vorhergehenden Ansprüche, **gekennzeichnet durch** Starten eines die Pumpe (23) antreibenden Antriebs (22) und Überwachen wenigstens eines Betriebsparameters (i) des Antriebs (22).

6. Verfahren nach Anspruch 5, **dadurch gekennzeichnet, dass** der Antrieb (22) einen elektrischen Motor, insbesondere einen bürstenlosen Drehstrom-Synchronmotor, aufweist.

7. Verfahren nach Anspruch 5 oder 6, **dadurch gekennzeichnet, dass** der Betriebsparameter eine elektrische Leistung des Antriebs (22), ein elektrischer Strom (i) des Antriebs (22), eine elektrische Spannung des Antriebs (22), ein vom Antrieb (22) aufzubringendes Drehmoment und/oder eine Drehzahl des Antriebs (22) ist.

8. Verfahren nach Anspruch 7, **dadurch gekennzeichnet, dass** der Betriebsparameter der elektrische Strom (i) des Antriebs (22) ist und der Schwellenwert (iS) einer elektrischen Stromstärke zugeordnet ist, die größer als die elektrische Stromstärke des elektrischen Antriebs (22) ist, wenn die Pumpe (23) im Wesentlichen nur in Luft läuft, und kleiner als die des elektrische Stromstärke des Antriebs (22) ist, wenn die Pumpe (23) im Wesentlichen kontinuierlich Flüssigkeit fördert, oder bei dem der Betriebsparameter die elektrische Leistung des Antriebs (22) ist und der Schwellenwert (iS) einer elektrischen Leistung zugeordnet ist, die größer als die elektrische Leistung des Antriebs (22) ist, wenn die Pumpe (23) im Wesentlichen nur in Luft läuft, und kleiner als die elektrische Leistung des Antriebs (22) ist, wenn die Pumpe (23) im Wesentlichen kontinuierlich Flüssigkeit fördert.

9. Verfahren nach einem der vorhergehenden Ansprüche, **gekennzeichnet durch** zusätzlich Abpumpen von im Spülbehälter (2) befindlicher Flüssigkeit vor dem Füllen des Vorratsbehälters (8) mit Flüssigkeit und/oder vor dem Starten der Umlaufpumpe (23).

10. Wasserführendes Haushaltsgerät, insbesondere Geschirrspül- oder Waschmaschine, wenigstens aufweisend einen Vorratsbehälter (8), der mittels eines Überlaufauslaufs (9) mit einem Spülbehälter (2) flüssigkeitsleitend verbunden ist und mit einer Pumpe (23), die mit dem Spülbehälter (2) flüssigkeitsleitend in Verbindung steht, sowie mit einer Steuervorrichtung (16), die eingerichtet ist, vor oder während eines Füllvorgangs des Vorratsbehälters (8) die Pumpe (23) zu starten und wenigstens einen der Pumpe (23) zugeordneten Betriebsparameter (i) zu überwachen und den Füllvorgang zu beenden, wenn der Betriebsparameter (i) einen vorgegebenen Schwellenwert (iS) erreicht und/oder wenn der Betriebsparameter (i) eine vorgegebene Schwankungsbreite überschreitet.

11. Wasserführendes Haushaltsgerät nach Anspruch 10, **dadurch gekennzeichnet, dass** der Vorratsbehälter (8) wärmeleitend mit dem Spülbehälter (2) verbunden ist.

12. Wasserführendes Haushaltsgerät nach Anspruch 10 oder 11, **dadurch gekennzeichnet, dass** deren Vorratsbehälter (8) wärmeleitend mit einer Außenwand des Spülbehälters (2) verbunden ist.

13. Wasserführendes Haushaltsgerät nach einem Ansprüche 10 bis 12, **dadurch gekennzeichnet, dass** innerhalb des Spülbehälters (2) Sprühvorrichtungen (5) angeordnet sind, zu denen mit der Pumpe (23) Flüssigkeit förderbar ist.

14. Wasserführendes Haushaltsgerät nach einem der Ansprüche 10 bis 13, **dadurch gekennzeichnet, dass** der der Umwälzpumpe (23) zugeordnete Betriebsparameter ein Betriebsparameter (i) eines Antriebs (22) ist.

15. Wasserführendes Haushaltsgerät nach Anspruch 14, **dadurch gekennzeichnet, dass** der Antrieb (22) einen elektrischen Motor, insbesondere einen bürstenlosen Drehstrom-Synchronmotor, aufweist.

16. Wasserführendes Haushaltsgerät nach Anspruch 14 oder 15, **dadurch gekennzeichnet, dass** der Betriebsparameter eine elektrische Leistung des Antriebs (22), ein elektrischer Strom (i) des Antriebs (22), eine elektrische Spannung des Antriebs (22), ein vom Antrieb (22) aufzubringendes Drehmoment und/oder eine Drehzahl des elektrischen Antriebs (22) ist.

17. Wasserführendes Haushaltsgerät nach Anspruch 16, **dadurch gekennzeichnet, dass** der Betriebsparameter der elektrische Strom (i) Antriebs (22) ist und der Schwellenwert (iS) einer elektrischen Stromstärke zugeordnet ist, die größer als die elektrische Stromstärke des Antriebs (22) ist, wenn die Umwälzpumpe (23) im Wesentlichen nur in Luft läuft, und kleiner als die elektrischen Stromstärke des Antriebs (22) ist, wenn die Umwälzpumpe (23) im Wesentlichen kontinuierlich Flüssigkeit fördert, oder bei der der Betriebsparameter die elektrische Leistung des Antriebs (22) ist und der Schwellenwert (iS) einer elektrischen Leistung zugeordnet ist, die größer als die elektrische Leistung des elektrischen Antriebs (22) ist, wenn die Umwälzpumpe (23) im Wesentlichen nur in Luft läuft, und kleiner als die elektrische Leistung des Antriebs (22) ist, wenn die Umwälzpumpe (23) im Wesentlichen kontinuierlich Flüssigkeit fördert.

18. Wasserführendes Haushaltsgerät nach einem der Ansprüche 10 bis 17, **dadurch gekennzeichnet, dass** eine Pumpe zum Abpumpen von im Spülbehälter (2) befindlicher Flüssigkeit vorgesehen ist, wobei die Steuervorrichtung (16) eingerichtet ist, vor dem Öffnen eines Ventils (13) und/oder vor dem Starten des Antriebs (22) die Pumpe zum Abpumpen von im Spülbehälter (2) befindlicher Flüssigkeit zu starten, um im Spülbehälter (2) befindliche Flüssigkeit abzupumpen.

## Claims

1. Method for operating a water-conducting household appliance, in particular a dishwasher or washing machine, at least comprising a storage container (8) which is connected by means of an overflow outlet (9) in a liquid-conducting manner to a washing compartment (2) and having a pump (23) which is connected in a liquid-conducting manner to the washing compartment (2),
the method comprising the two method steps of
- starting the pump (23), and
- filling the storage container (8) with liquid,
in any order or simultaneously,
further comprising the additional method steps of
- monitoring at least one operating parameter (i) associated with the pump (23) after the pump (23) has been started, and
- terminating the filling of the storage container (8) with liquid when the operating parameter (i) reaches a predefined threshold value (iS) and/or when the operating parameter (i) exceeds a predefined fluctuation range.

2. Method according to claim 1, **characterised in that** the storage container (8) is connected to the washing compartment (2) in a heat-conducting manner.

3. Method according to claim 1 or 2, **characterised in that** the storage container (8) is connected to an external wall of the water-conducting household appliance in a heat-conducting manner.

4. Method according to one of the preceding claims, **characterised in that** liquid is delivered by means of the pump (23) to spraying devices (5) disposed inside the washing compartment (2).

5. Method according to one of the preceding claims, **characterised by** starting of a drive (22) driving the pump (23) and monitoring of at least one operating parameter (i) of the drive (22).

6. Method according to claim 5, **characterised in that** the drive (22) has an electric motor, in particular a brushless three-phase synchronous motor.

7. Method according to claim 5 or 6, **characterised in that** the operating parameter is an electric power output of the drive (22), an electric current (i) of the drive (22), an electric voltage of the drive (22), a torque that is to be generated by the drive (22) and/or a rotational speed of the drive (22).

8. Method according to claim 7, **characterised in that** the operating parameter is the electric current (i) of the drive (22) and the threshold value (iS) is associated with an electric current intensity which is greater than the electric current intensity of the electric drive (22) when the pump (23) is essentially running only in air, and less than the electric current intensity of the drive (22) when the pump (23) is pumping liquid essentially continuously, or wherein the operating parameter is the electric power output of the drive (22) and the threshold value (iS) is associated with an electric power output which is greater than the electric power output of the drive (22) when the pump (23) is essentially running only in air, and less than the electric power output of the drive (22) when the pump (23) is pumping liquid essentially continuously.

9. Method according to one of the preceding claims, **characterised by** additional pumping out of liquid contained in the washing compartment (2) before the storage container (8) is filled with liquid and/or before the circulation pump (23) is started.

10. Water-conducting household appliance, in particular a dishwasher or washing machine, at least comprising a storage container (8) which is connected by means of an overflow outlet (9) in a liquid-conducting manner to a washing compartment (2) and having a pump (23) which is connected in a liquid-conducting manner to the washing compartment (2), and having a control device (16) which is configured for starting the pump (23) before or during a filling operation of the storage container (8) and for monitoring at least one operating parameter (i) associated with the pump (23) and for terminating the filling operation when the operating parameter (i) reaches a predefined threshold value (iS) and/or when the operating parameter (i) exceeds a predefined fluctuation range.

11. Water-conducting household appliance according to claim 10, **characterised in that** the storage container (8) is connected to the washing compartment (2) in a heat-conducting manner.

12. Water-conducting household appliance according to claim 10 or 11, **characterised in that** the storage container (8) is connected to an external wall of the washing compartment (2) in a heat-conducting manner.

13. Water-conducting household appliance according to one of claims 10 to 12, **characterised in that** disposed inside the washing compartment (2) are spraying devices (5) to which liquid can be delivered by means of the pump (23).

14. Water-conducting household appliance according to one of claims 10 to 13, **characterised in that** the operating parameter associated with the circulation pump (23) is an operating parameter (i) of a drive (22).

15. Water-conducting household appliance according to claim 14, **characterised in that** the drive (22) has an electric motor, in particular a brushless three-phase synchronous motor.

16. Water-conducting household appliance according to claim 14 or 15, **characterised in that** the operating parameter is an electric power output of the drive (22), an electric current (i) of the drive (22), an electric voltage of the drive (22), a torque that is to be generated by the drive (22) and/or a rotational speed of the electric drive (22).

17. Water-conducting household appliance according to claim 16, **characterised in that** the operating parameter is the electric current (i) of the drive (22) and the threshold value (iS) is associated with an electric current intensity which is greater than the electric current intensity of the drive (22) when the circulation pump (23) is essentially running only in air, and less than the electric current intensity of the drive (22) when the circulation pump (23) is pumping liquid essentially continuously, or wherein the operating parameter is the electric power output of the drive (22) and the threshold value (iS) is associated with an electric power output which is greater than the electric power output of the electric drive (22) when the circulation pump (23) is essentially running only in air, and less than the electric power output of the drive (22) when the circulation pump (23) is pumping liquid essentially continuously.

18. Water-conducting household appliance according to one of claims 10 to 17, **characterised in that** a pump is provided for the purpose of pumping out liquid contained in the washing compartment (2), wherein the control device (16) is configured for starting the pump for pumping out liquid contained in the washing compartment (2) in order to drain off liquid contained in the washing compartment (2) before a valve (13) is opened and/or before the drive (22) is started.

## Revendications

1. Procédé de conduite d'un appareil ménager à circulation d'eau, en particulier d'un lave-vaisselle ou d'un lave-linge, présentant au moins un récipient de stockage (8), qui est en communication d'écoulement de liquide avec un récipient de rinçage (2) via une sortie par débordement (9) et avec une pompe (23), qui est en communication d'écoulement de liquide avec le récipient de rinçage (2), qui présente les deux étapes suivantes:
- démarrage de la pompe (23), et
- remplissage du récipient de stockage (8) avec du liquide,
dans un ordre quelconque ou simultanément,
présentant en outre les autres étapes:
- surveillance d'au moins un paramètre de fonctionnement (i) associé à la pompe (23) après le démarrage de la pompe (23), et
- fin du remplissage du récipient de stockage (8) avec du liquide, lorsque le paramètre de fonctionnement (i) atteint une valeur de seuil prédéterminée (iS) et/ou lorsque le paramètre de fonctionnement (i) dépasse une largeur de fluctuation prédéterminée.

2. Procédé selon la revendication 1, **caractérisé en ce que** le récipient de stockage (8) est relié en conduction de chaleur avec le récipient de rinçage (2).

3. Procédé selon la revendication 1 ou 2, **caractérisé en ce que** le récipient de stockage (8) est relié en conduction de chaleur avec une paroi extérieure de l'appareil ménager à circulation d'eau.

4. Procédé selon l'une quelconque des revendications précédentes, **caractérisé en ce que** du liquide est transporté par la pompe (23) jusqu'à des dispositifs de projection (5) disposés à l'intérieur du récipient de rinçage (2).

5. Procédé selon l'une quelconque des revendications précédentes, **caractérisé par** le démarrage d'un entraînement (22) entraînant la pompe (23) et la surveillance d'au moins un paramètre de fonctionnement (i) de l'entraînement (22).

6. Procédé selon la revendication 5, **caractérisé en ce que** l'entraînement (22) présente un moteur électrique, en particulier un moteur synchrone triphasé sans balais.

7. Procédé selon la revendication 5 ou 6, **caractérisé en ce que** le paramètre de fonctionnement est une puissance électrique de l'entraînement (22), un courant électrique (i) de l'entraînement (22), une tension électrique de l'entraînement (22), un couple moteur à appliquer par l'entraînement (22) et/ou une vitesse de rotation de l'entraînement (22).

8. Procédé selon la revendication 7, **caractérisé en ce que** le paramètre de fonctionnement est le courant électrique (i) de l'entraînement (22) et la valeur de seuil (iS) est associée à une intensité du courant électrique, qui est supérieure à l'intensité du courant électrique de l'entraînement électrique (22), lorsque la pompe (23) tourne essentiellement uniquement dans l'air, et inférieure à l'intensité du courant électrique de l'entraînement (22), lorsque la pompe (23) transporte du liquide essentiellement en continu, ou dans lequel le paramètre de fonctionnement est la puissance électrique de l'entraînement (22) et la valeur de seuil (iS) est associée à une puissance électrique, qui est supérieure à la puissance électrique de l'entraînement (22) lorsque la pompe (23) tourne essentiellement uniquement dans l'air, et inférieure à la puissance électrique de l'entraînement (22), lorsque la pompe (23) transporte du liquide essentiellement en continu.

9. Procédé selon l'une quelconque des revendications précédentes, **caractérisé par** un pompage additionnel de liquide se trouvant dans le récipient de rinçage (2) avant le remplissage du récipient de stockage (8) avec du liquide et/ou avant le démarrage de la pompe de circulation (23).

10. Appareil ménager à circulation d'eau, en particulier lave-vaisselle ou lave-linge, comprenant au moins un récipient de stockage (8), qui est en communication d'écoulement de liquide avec un récipient de rinçage (2) via une sortie à débordement (9) et avec une pompe (23), qui est en communication d'écoulement de liquide avec le récipient de rinçage (2), ainsi qu'avec un dispositif de commande (16), qui est conçu de façon à démarrer la pompe (23) avant ou pendant une opération de remplissage du récipient de stockage (8) et à surveiller au moins un paramètre de fonctionnement (i) associé à la pompe (23) et à cesser l'opération de remplissage lorsque le paramètre de fonctionnement (i) atteint une valeur de seuil prédéterminée (iS) et/ou lorsque le paramètre de fonctionnement (i) dépasse une largeur de fluctuation prédéterminée.

11. Appareil ménager à circulation d'eau selon la revendication 10, **caractérisé en ce que** le récipient de stockage (8) est en communication de conduction de chaleur avec le récipient de rinçage (2).

12. Appareil ménager à circulation d'eau à circulation d'eau selon la revendication 10 ou 11, **caractérisé en ce que** son récipient de stockage (8) est en communication de conduction de chaleur avec une paroi extérieure du récipient de rinçage (2).

13. Appareil ménager à circulation d'eau selon l'une quelconque des revendications 10 à 12, **caractérisé en ce que** des dispositifs de projection (5) sont disposés à l'intérieur du récipient de rinçage (2), vers lesquels du liquide peut être envoyé avec la pompe (23).

14. Appareil ménager à circulation d'eau selon l'une quelconque des revendications 10 à 13, **caractérisé en ce que** le paramètre de fonctionnement associé à la pompe de circulation (23) est un paramètre de fonctionnement (i) d'un entraînement (22).

15. Appareil ménager à circulation d'eau selon la revendication 14, **caractérisé en ce que** l'entraînement (22) présente un moteur électrique, en particulier un moteur synchrone triphasé sans balais.

16. Appareil ménager à circulation d'eau selon la revendication 14 ou 15, **caractérisé en ce que** le paramètre de fonctionnement est une puissance électrique de l'entraînement (22), un courant électrique (i) de l'entraînement (22), une tension électrique de l'entraînement (22), un couple moteur à appliquer par l'entraînement (22) et/ou une vitesse de rotation de l'entraînement électrique (22).

17. Appareil ménager à circulation d'eau selon la revendication 16, **caractérisé en ce que** le paramètre de fonctionnement est le courant électrique (i) de l'entraînement (22) et la valeur de seuil (iS) est associée à une intensité du courant électrique, qui est supérieure à l'intensité du courant électrique de l'entraînement (22), lorsque la pompe de circulation (23) tourne essentiellement uniquement dans l'air, et inférieure à l'intensité du courant électrique de l'entraînement (22), lorsque la pompe de circulation (23) transporte du liquide essentiellement en continu, ou dans lequel le paramètre de fonctionnement est la puissance électrique de l'entraînement (22) et la valeur de seuil (iS) est associée à une puissance électrique, qui est supérieure à la puissance électrique de l'entraînement électrique (22) lorsque la pompe de circulation (23) tourne essentiellement uniquement dans l'air, et inférieure à la puissance électrique de l'entraînement (22), lorsque la pompe de circulation (23) transporte du liquide essentiellement en continu.

18. Appareil ménager à circulation d'eau selon l'une quelconque des revendications 10 à 17, **caractérisé en ce qu'**il est prévu une pompe pour le pompage de liquide se trouvant dans le récipient de rinçage (2), dans lequel le dispositif de commande (16) est conçu pour démarrer la pompe pour pomper du liquide se trouvant dans le récipient de rinçage (2) avant l'ouverture d'une soupape (13) et/ou avant le démarrage de l'entraînement (22), afin de pomper du liquide se trouvant dans le récipient de rinçage (2).
